# EUROPEAN PATENT APPLICATION

(11) **EP 0 933 015 A1**
(43) Date of publication of application: **04.08.1999**
(21) Application number: 99400203.8
(22) Date of filing: 28.01.1999
(51) Int. Cl.: A01D 46/26

(54) **Fruit harvesting machine**

(30) Priority: 29.01.1998 IL 12311398
(71) Applicant: Meshek Advanced Solutions for Agriculture Ltd, Ramat Gan 52511 (IL)
(72) Inventor: Govrin, Amir, Herzliya 46465 (IL)
(74) Representative: Moutard, Pascal Jean

(57) **Abstract**

A hand-held agricultural machine comprising a vibrating rod (44) having a longitudinal axis and fitted at a free end thereof with an agricultural accessory member (46) and being engaged at an opposed end thereof to a motion generator (22) imparting the vibrating rod (44) a reciprocal-linear motion along the longitudinal axis, at a predetermined frequency and amplitude, and an elongate support member (26) connected to the motion generator (46) and extending along the longitudinal axis.

## Description

### FIELD OF THE INVENTION

The present invention is in the field of hand-held agricultural machines such as saws and fruit harvesting machines. In particular the invention is concerned with manually operated machines for harvesting fruits by shaking the tree's branches.

### BACKGROUND OF THE INVENTION

The term *"fruit"* as used herein in the specification and claims refers collectively to fruits of the type which grow on trees and which are connected by a fine stem to a branch. Such fruits are, for example, olives, different kinds of nuts, etc. Such types of fruits are harvested in different ways, e.g., plucking, picking, beating and shaking. The present invention refers only to the latter, i.e., shaking.

Fruits, until full ripening and before windfall, can withstand harsh motions of the tree's branches, despite their exposure to wind gusts and storms. Although the nature of these motions is similar to whipping motions, the fruits do not become detached from the branches because they grow on the tip of a thin flexible stem attached to a heavier branch which gradually becomes thicker and which together assume mechanical elasticity. As a result, the whipping motions are damped, and the fruits get a minimum mechanical tear-off momentum. Thus, one has to apply greater whip-like mechanical forces than exist in nature or, to circumvent the mechanical damping effect by applying a substansive shaking motion suitable for detaching the fruit from the stem.

Amongst the prior art devices which are intended for the purpose of harvesting fruits from trees, are shaking machines which are designed to apply strong forces to shake the entire tree by gripping it at its trunk or, in some cases, by gripping it at some heavy branches. However, this method has the drawback of causing damage to the tree and branches, respectively.

Other prior art devices are hand-held or back mounted machines for imparting the branches shaking motion via rigid connecting means, whereby the recoiled motion severely shakes the operator as well.

It is an object of the present invention to provide a hand-held harvesting device for harvesting fruit of the type described above. The present invention provides a device for shaking the tree's branches to break-off the fruits from the branches by generating vibrating forces operating at predetermined frequency and amplitude. For the best shaking-off effect of fruits from the tree the frequency and resonance match the tree's branch resonance. The invention is also concerned with means for minimizing the reactionary forces imparted to the operator of the device. The device subject of the present invention may be used also for other agricultural tasks such as sawing of branches.

### SUMMARY OF THE INVENTION

In accordance with the present invention there is provided a hand-held agricultural machine comprising a vibrating rod having a longitudinal axis and fitted at a free end thereof with an agricultural accessory member and being engaged at an opposed and thereof to a motion generator imparting said vibrating rod a reciprocal-linear motion along said longitudinal axis, at a predetermined frequency and amplitude; and an elongate support member connected to said motion generator and extending along said longitudinal axis.

By one specific and preferred embodiment, the agricultural accessory is a branch engaging member wherein said machine is a fruit harvester.

In accordance with the preferred embodiment of the invention, the branch engaging member comprises two arms arranged at an essentially V-like shape. Preferably, the arms of the branch engaging member define between them a plane having a normal extending perpendicular to the longitudinal axis of the vibrating rod. It is desired that the arms of the branch engaging member are symmetrically disposed and define between them, in some preferred embodiments, an angle at between about 15-45°.

In order to minimize the damage caused to the tree's branches, the arms are fitted, at least at facing sides thereof, with padding material which by preferred embodiments is replaceable.

In accordance with a preferred design of the branch engaging member the free ends thereof are formed with outwardly extending extensions.

By one specific embodiment, the motion generator is a linear-motion generator fitted with a motion inverter. In accordance with this embodiment, the linear motion generator is a pneumatic piston fitted with a reciprocating actuator. For best results, a compensation weight (balance weight) is fitted at the rear end of the device.

By another specific embodiment, the motion generator is a mechanical motion converter for converting rotary motion imparted by a motor into linear motion. In accordance with this embodiment, the support member comprises a motion transmission rod revolving within a support tube, wherein the motion converter is attached at a first end of said transmission rod.

For comfort of the operator of the device, the support member is fitted with a gripping member. Preferably, the gripping member is axially and reciprocally displaceable with respect to the support tube. Still preferably, the reciprocal displacement of the gripping member is essentially similar to the amplitude of the motion generator. For minimizing reactionary forces and for improving efficiency of the harvesting device, the gripping member is positioned at a rear portion of the device, between the motor and between the mechanical motion converter.

In accordance with a specific embodiment, the gripping member is biased to retain a predetermined position with respect to the support tube. In accordance with one design, the gripping member is engaged with a support tube via linear bearings.

In order to impart the machine compactability, the transmission rod is connected to a motor disengagingly attached at a second end thereof and wherein the vibrating rod is detachable and replaceable.

For easy operation the gripping member is fitted with an actuating mechanism for control of the motion generator. Preferably, the gripping member is reciprocal only in an axial direction and is not revolvable with respect to the support tube, whereas the actuating mechanism is also free, at least to a degree, to rotate about the support tube.

For most comfortable use, the machine is designed such that it is weight- balanced at about the gripping member and a suitable shoulder strap or harness is provided.

In accordance with one particular design, the motion converter is a crank and rod type mechanism.

### BRIEF DESCRIPTION OF THE DRAWINGS

For better understanding, the invention will now be described in a nonlimiting manner, by way of example only, with reference to the accompanying drawings, in which:
**Fig. 1** is an overall view of a fruit harvesting machine in accordance with the present invention, wherein:
**Fig. 1A** is a side view thereof; and
**Fig. 1B** is a top view thereof;
**Fig. 2** is a side view of the device in its utility as a branch cutting device;
**Fig. 3** is a perspective view of a branch engaging member devoid of padding means;
**Fig. 4A** is a perspective view of a branch engaging member in accordance with the present invention fitted with a replaceable padding;
**Fig. 4B** is a perspective view of a replaceable padding suitable for use in a branch engaging member seen in Fig. 3A;
**Fig. 5** is a perspective view of the components of a mechanical motion converter for converting rotary motion into linear motion;
**Figs. 6A** and **6B** illustrate the mechanical motion converter of Fig. 5 in two respective positions;
**Figs. 7A** and **7B** illustrate connecting and disconnecting, respectively, of the vibrating rod from an extension member of the device;
**Figs. 8A** and **8B** are cross-sectional views through a portion of the device illustrating displacement of the support member;
**Figs. 9A** and **9B** are side and top views, respectively, of a pneumatically operated harvesting device in accordance with an embodiment of the present invention; and
**Figs. 10A** and **10B** are schematic representations of the pneumatic actuating device of the embodiment seen in Figs. 9 in a retracted and extracted position, respectively.

### DETAILED DESCRIPTION OF A PREFERRED EMBODIMENT

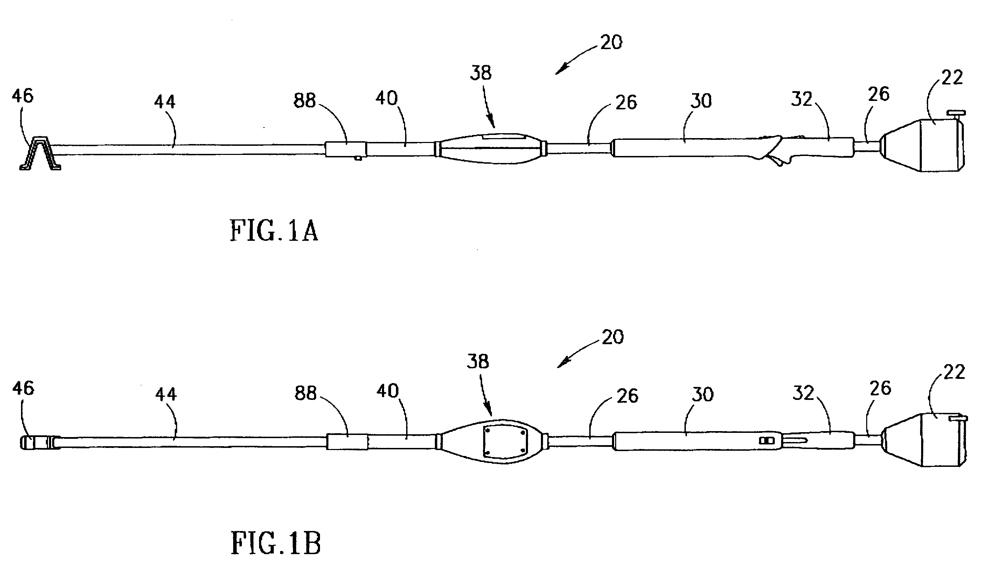

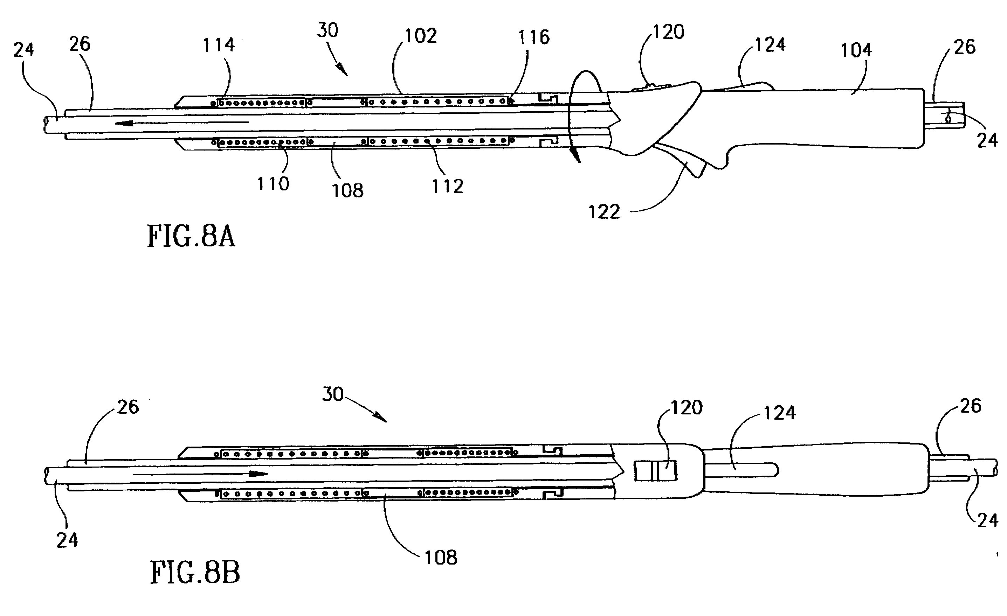

Attention is first directed to Figs. 1A and 1B giving an overall view of a fruit harvesting device in accordance with the present invention generally designated **20**. The harvesting device comprises a fuel operated motor **22** connected to a motion transmitting rod **24** (seen in Figs. 8) rotatable by said motor **22.** Motion transmitting rod **24** is rotatably received within a support tube **26** (see also Figs. 8). A gripping member **30** is mounted on the support tube **26** and has associated thereto an actuating mechanism and grip **32** (seen in more detail in Figs. 8).

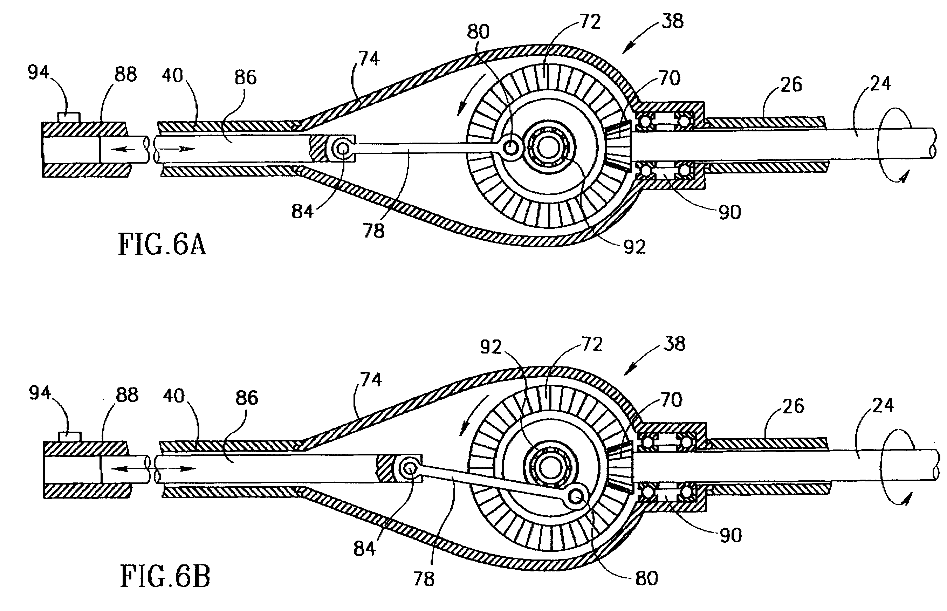

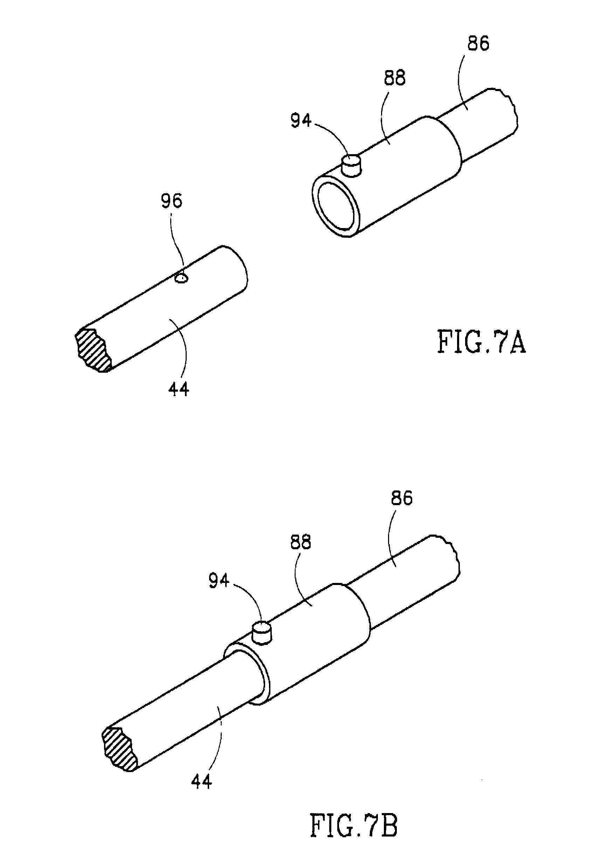

Fitted after the gripping member **30**, at about mid-length of the harvesting device is a motion converter generally designated **38.** The motion converter is a device adapted to receive at one end rotary motion via the motion transmitting rod **24** and generating reciprocal linear motion at its other end, as will be explained hereinafter in some more detail with reference to Figs. 6 and 7.

Extending from motion converter **38** there is a connecting tube portion **40** adapted for detachably receiving a vibrating rod **44** and being adapted for reciprocal linear displaceable along its longitudinal axis as will be explained hereinafter.

At an end of the vibrating rod **44** there is fitted, either replaceably or fixedly, an agricultural accessory which in the present example is a branch engaging member **46**, generally having a V-like shape for the reason to become apparent hereinafter.

A suitable shoulder strap or harness may be attached either to the gripping member **30** or to the actuating mechanism **32**, and although such a strap or harness is not shown, it is readily understood that a variety of such straps may be used.

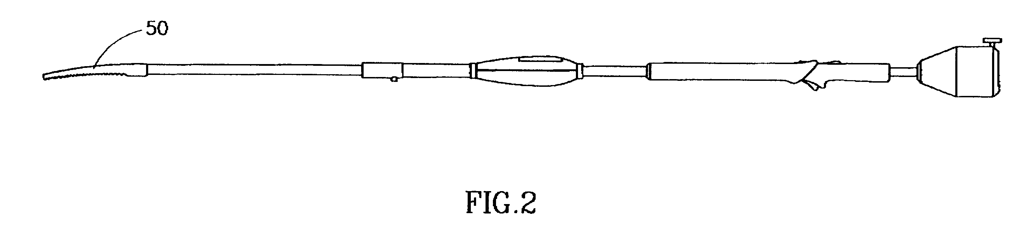

It is noted that the branch engaging member **46** may be connected to vibrating rod **44** either in a fixed manner or in a detachable manner. The branch engaging member **46** may be replaced by a different agricultural accessory which in the case of Fig. 2 is a branch saw **50** adapted for linear reciprocal displacement along the longitudinal axis of vibrating rod **44** and thus being suitable for sawing branches. Other components of the device seen in Fig. 2 are identical with the components of the fruit harvesting machines **20** seen in Figs. 1.

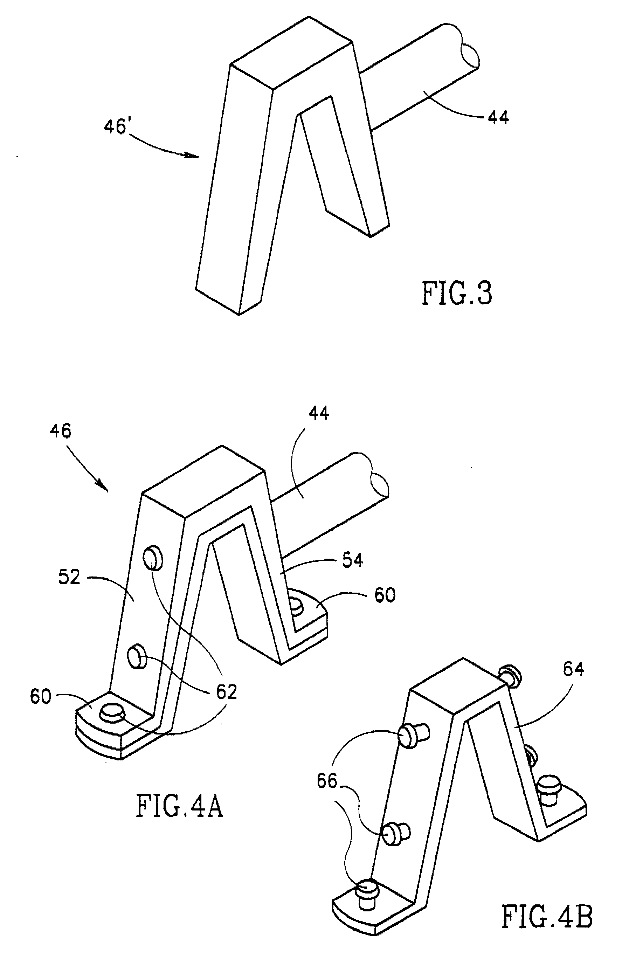

A basic design of a branch engaging member **46'** is seen in Figs. 3. The branch engaging member has an essentially V-like shape with one arm thereof being rigidly attached to the vibrating rod **44.**

Further attention is now directed to Figs. 4 in which a branch engaging member **46** is seen in more detail. The branch engaging member **46** is made of a hard material, typically metal and comprises two arms **52** and **54,** the latter being attached at the end of vibrating rod **44.** The arms **52** and **54** are arranged at an essentially V-like shape, defining between them a plane having a normal essentially perpendicular to the longitudinal axis of the vibrating rod **44**.

Each of the arms **52** and **54** has at its end an outwardly extending extension **60.** Each of arms **52** and **54** and extension **60** comprise openings **62**. A pad **64** (see detailed view in Fig. 4B) has a shape corresponding with that of the branch engaging member **46** and comprises projections **66** for detachable engagement within holes **62**. Pad **64** is made of a resilient material such as rubber and is provided in order to minimize damage caused to branches during a harvesting procedure. In some cases, pad **64** may consist of two pieces, each fixed to respective arms of the gripping member.

The shape of the branch engaging member **46** is such as to allow accommodation therein of varying sizes of branches while ensuring firm grip of the branch so as to minimize the damage caused to the branch on the one hand and, on the other hand, to ensure maximal efficiency of the harvesting process. The V-like shape of the branch engaging member **64** ensures that a branch of any size is firmly gripped and that all the vibrational displacements of the vibrating rod **44** are in fact transmitted to the branch without idle displacement of the branch engaging member with respect to the branch.

It was found, that for obtaining best results, the arms of the branch engaging member **64** should be arranged in a symmetric V-like arrangement, i.e. defining between them a line a symmetry. Preferably, this line is perpendicular to the longitudinal axis of the vibrating rod. An angle of between about 15-45° between the arms of the branch engaging member perform best results.

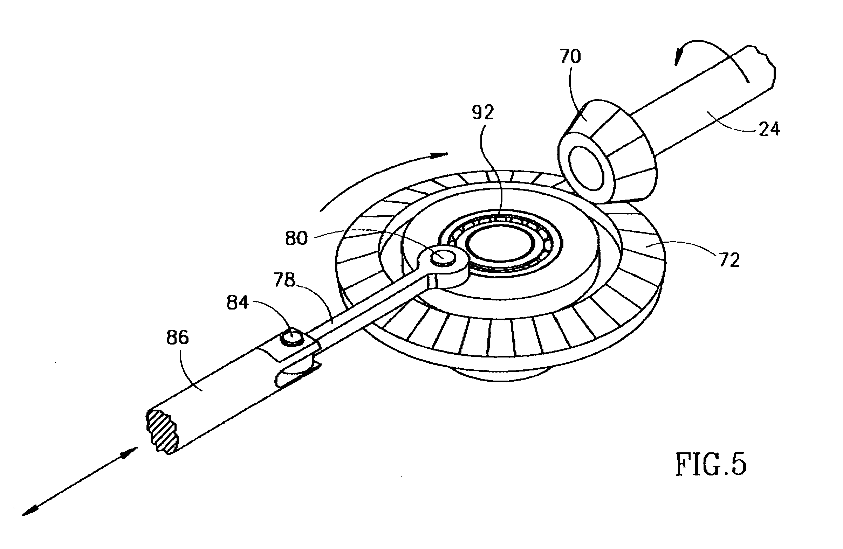

Further attention is now directed to Figs. 5 and 6 for understanding how the rotary motion imparted by motor **22** is converted into reciprocal linear motion. Motion transmitting rod **24** is rotatably received within support tube **26** (see Fig. 1) and is coupled, at one end thereof to the motor **22**. At an opposed end thereof there is a beveled pinion **70** engaged with a bevel gear **72** rotatably received within housing **74** (see Figs. 6). A connecting rod **78** is pivotably connected at **80** to bevel gear **72** and at **84** to rod **86** linearly displaceable within connecting tube portion **40**. Rod **86** is fitted at its opposed end thereof with a connecting member **88** adapted for releasably attaching thereto the vibrating rod **44,** as will be explained hereinafter with reference to Figs. 7.

The arrangement is such that rotary motion about a longitudinal axis of motion transmitting rod **24** is transmitted to rotary motion in a plane perpendicular to said longitudinal axis and is then converted into linear reciprocal motion of rod **86** along the longitudinal axis It is noted in Figs. 6A and 6B that motion transmitting rod **24** is rotatably supported within housing **74** by bearing assembly **90** and that the beveled gear **72** is rotatable about a bearing **92** for minimizing friction and importing the converting mechanism **38** essentially a smooth and quiet operation.

For purposes of transportation and storage and for replacing the agricultural accessory, it is required to disassemble the vibrating rod **44** from the device. Accordingly, as mentioned in connection with Figs. 6A and 6B, at the end of rod **86** there is provided a connecting member **88** fitted with a snapping latch **94** adapted for snapping engagement with a recess **96** formed at the respective end of vibrating rod **34** (see Fig. 7A). Disconnecting of the vibrating rod **44** is carried out by simply depressing latch **94** against the force of a biasing spring (not shown) and pulling apart the connecting rod **94**. Other connecting arrangements are possible too, as the artisan will no doubt appreciate. One such example is by a through-going bore extending in the connecting rod and corresponding openings formed in the connecting member **88** through which a connecting pin is inserted, as known in the art.

The gripping member generally designated **30** is seen in Figs. 8 in more detail. The gripping member comprises a gripping portion **102** and an actuating mechanism portion **104.** A ring **108** is fastened over the support tube **26** within the gripping portion **102.** Two coiled springs **110** and **112** are provided, each bearing against a respective end wall of ring **108** and a respective wall portion **114** and **116** formed within the gripping portion **102.** The respective ends of springs **110** and **112** are linked to the ring at one end thereof and to the respective walls **114** and **116** at the opposite ends thereof.

The arrangement is such that the gripping member **30** becomes biased into a mid-position in which both springs **110** and **112** are in force equilibrium. This arrangement is provided for cancelling or reducing to a minimum the vibrational displacements of the device imparted to a person operating same. In accordance with a preferred design of the device, the reciprocal displacement of the gripping members is essentially similar to the amplitude of the motion generator which is in accordance with some preferred embodiments up to about 120 mm. However, an optimum amplitude of about **50** mm has performed best results.

Actuating mechanism portion **104** is fitted with several operating knobs as known *per se* e.g. an *on/off* switch **120**, a throttle **122** and an immobilizer **124** (see Fig. 8A) for preventing unintentional operation of the device.

In order to facilitate comfortable gripping of the actuating portion **104**, and to ensure that the operator is in full control of the switches fitted thereon, the actuating mechanism portion **104** is also rotatable about the support tube **26.** Contrary thereto, the gripping portion **102** is only axially displaceable along the support tube **26** and is not rotatable.

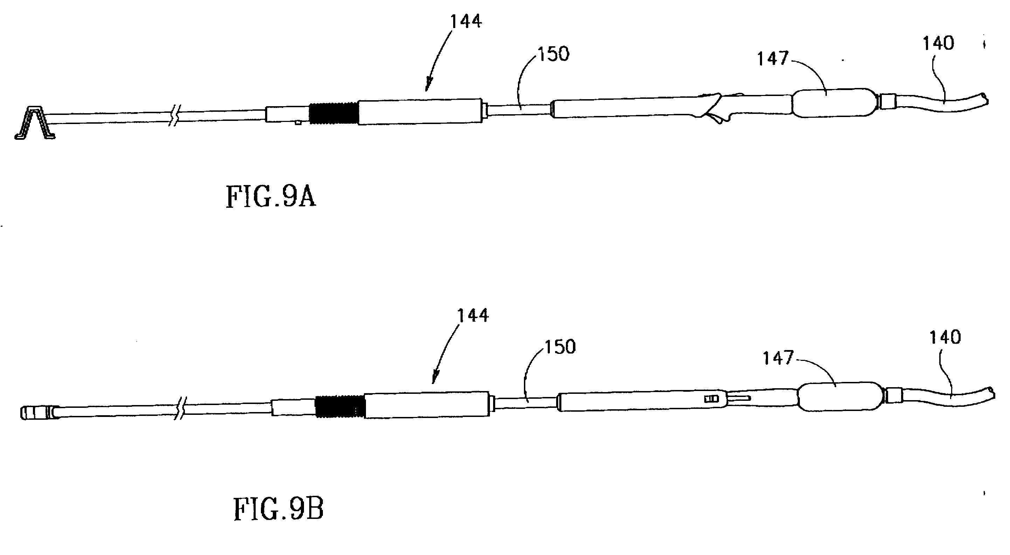

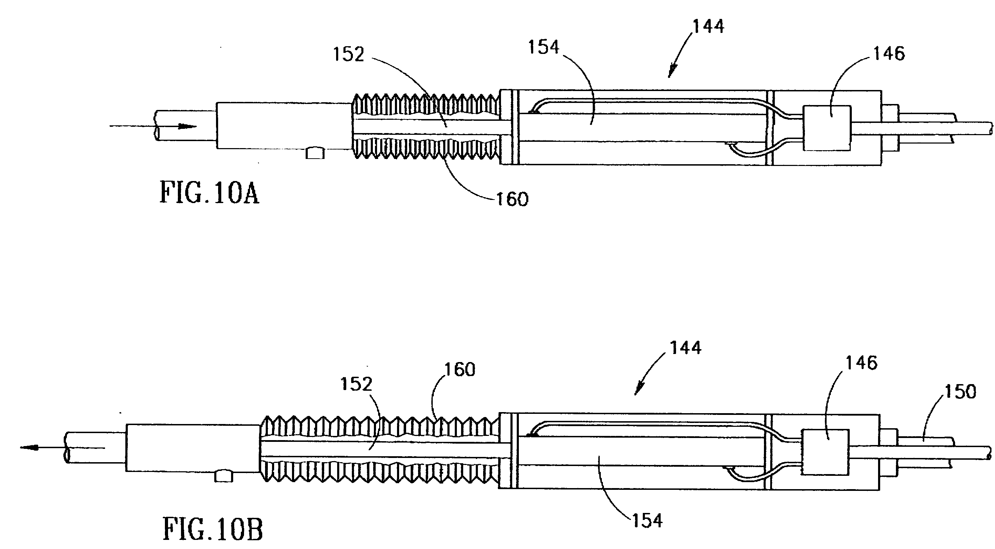

In the embodiment of Figs. 9 and 10, the motor **22** and the motion converter **28** are replaced by a source of air pressure (not seen) provided via suitable piping **140** wherein the linear motion generator is a pneumatic mechanism generally designated **144** fitted with a reciprocating actuator **146**, schematically represented in Figs. 10. A counterweight **147** is provided at a rear end of the device, behind the gripping member.

In accordance with this embodiment, air pressure is provided via tube **140** from a source of pressured air, typically a portable air compressor, wherein pressurized air is transferred via hollow support tube **150**, then received at the pneumatic linear motion mechanism generally designed **144**. As the pressurized air enters the reciprocating actuator **146** (see Figs. 10), piston **152** is rejected from cylinder **154** into the extracted position seen in Fig. 10B. Upon emitting a reversing command by the reciprocating activator **146,** the piston **152** retracts into cylinder **154**. This reciprocal displacement continues as long as reciprocating actuator **146** receives pressurized air. It is noted that the piston is received within a bellows type sleeve **160**, the length of which being adjustable to the piston's position.

When using a hand-held device according to the present invention, it is desired, on the one hand, to reduce to a minimum the vibrations and reactionary forces imparted to the operator of the device and, on the other hand, to obtain maximum efficiency, i.e. shaking force at the branch engaged with the device. For meeting these requirements, the dimensions and masses of the device are designed such that the so-called *"parasitic mass"* is minimal. The term *"parasitic mass* " refers to the weight of the vibrating rod together with the effective weight of a branch engaged therewith.

It is realized that smaller parasitic mass yields more efficient shaking, i.e. increased vibration speed at the fore end, namely of the vibrating rod, while at a rear end of the device, a low vibrating speed is obtained owing to the higher mass at this end which consists of the motion converter **38**, support tube **26**, gripping member **30**, motor **22** in case of a mechanically operated device or, instead of motor **22**, countenveight **147** in case of pneumatically operated device (Figs. 9 and 10).

Out of the overall weight of the device, it is desired that the parasitic mass, namely the mass displaceable together with the branch, be kept to a minimum while a maximum weight out of the overall mass of the device is at a rear end thereof.

In accordance with the preferred performances of the device, it was found that a preferred frequency of the reciprocal linear motion is up to about 75 Hz with the amplitude of the reciprocal linear motion being up to about 120 mm. In addition, and in accordance with a preferred design, the device is weight-balanced at about the gripping member for convenience of the operator.

By the preferred embodiments having been shown and described with reference to the accompanying drawings, it is to be understood that it is not intended thereby to limited the disclosure, but rather it is intended to cover all modifications and arrangements which fall within the scope and the spirit of the present invention, *mutatis mutandis.*

## Claims

1. A hand-held agricultural machine comprising a vibrating rod **44** having a longitudinal axis and fitted at a free end thereof with an agricultural accessory member **46** and being engaged at an opposed end thereof to a motion generator **22** imparting said vibrating rod **44** a reciprocal-linear motion along said longitudinal axis, at a predetermined frequency and amplitude; and an elongate support member **26** connected to said motion generator **46** and extending along said longitudinal axis.

2. A hand-held agricultural machine according to claim 1, wherein the agricultural accessory is a branch engaging member **46;46'** and wherein said machine is a fruit harvester.

3. A fruit harvester according to claim 2, wherein the branch engaging member comprises two arms **52;54** arranged at an essentially V-like shape.

4. A fruit harvester according to claim 3, wherein the arms **52;54** of the branch engaging member **46** define between them a plane having a normal essentially perpendicular to the longitudinal axis of the vibrating rod **44.**

5. A fruit harvester according to claim 3, wherein the arm **52;54** of the branch engaging member **46** are symmetrically disposed about a bi-sector of the angle between the arms, and wherein said bi-sector is essentially perpendicular to the longitudinal axis.

6. A fruit harvester according to claim 2, wherein the arms are fitted at least at facing sides thereof with a padding material **64**.

7. A fruit harvester according to claim 2, wherein the arms **52:54** are formed at free ends thereof with an outwardly extending extension **60**.

8. A fruit harvester according to claim 6, wherein the padding material **64** is replaceably attached to the arms **52;54.**

9. A hand-held agricultural machine according to claim 1, wherein the motion generator is a linear-motion generator **22** fitted with a motion converter **38.**

10. A hand-held agricultural machine according to claim 9, wherein the linear-motion generator is a pneumatic piston **152** fitted with a reciprocating actuator **146**.

11. A hand-held agricultural machine according to claim 1, wherein the motion generator is a mechanical motion converter **38** for converting rotary motion into linear motion.

12. A hand-held agricultural machine according to claim 11, wherein the support member comprises a motion transmission rod **24** revolving within a support tube **26**, wherein the motion converter **38** is attached at a first end of said transmission rod **24.**

13. A hand-held fruit harvester according to claim 1, wherein the support member is fitted with a gripping member **30**.

14. A band-held agricultural machine according to claim 13, wherein the gripping member **30** is axially and reciprocally displaceable with respect to the support tube **26**.

15. A hand-held agricultural machine according to claim 14, wherein the reciprocal displacement of the gripping member **30** is essentially similar to the amplitude of the motion converter **38**.

16. A hand-held agricultural machine according to claim 13, wherein the gripping member **30** is biased **110;112** to retain a predetermined position with respect to the support tube **26.**

17. A hand-held agricultural machine according to claim 13, wherein the gripping member **30** is engaged with the support tube via linear bearings.

18. , A hand-held agricultural machine to claim 12, wherein the transmission rod **24** is connected to a motor **22** disengagingly attached at a second end thereof.

19. A hand-held agricultural machine according to claim 1, wherein the vibrating rod **44** is detachable and replaceable.

20. A hand-held agricultural machine according to claim 13, wherein the gripping member **30** is fitted with an actuating mechanism **32** for control of the motion generator **122;144**.

21. A hand-held agricultural machine according to claim **20**, wherein the actuating mechanism **32** is reciprocally displaceable only in an axial direction.

22. A hand-held agricultural machine according to claim 20, wherein the support tube **26** is revolvable with respect to the actuating mechanism **32**.

23. A hand-held agricultural machine according to claim 13, being weight-balanced at about the gripping member.

24. A hand-held agricultural machine according to claim 1, wherein the motion converter **38** is a crank-and-rod type mechanism.

25. A hind-held fruit harvester according to claim 13, wherein the support tube **26** is revolvable with respect to the gripping member **30**.

26. A hand-held agricultural machine according to claim 13, wherein the gripping member **30** is disposed between the motion converter **38** and between a rear end of the device, and wherein a motor **22** or a counterweight **147** is fitted at said rear end.
